# EUROPÄISCHE PATENTSCHRIFT

(11) **EP 2 010 639 B1**
(45) Veröffentlichungstag und Bekanntmachung des Hinweises auf die Patenterteilung: **13.06.2018**
(21) Anmeldenummer: 06790936.6
(22) Anmeldetag: 09.10.2006
(51) Int. Cl.: C12C 1/16, B02B 3/04

(54) **VERFAHREN UND ANLAGE ZUR ENTSPELZUNG VON GETREIDE**
METHOD AND SYSTEM FOR DEHUSKING GRAINS
PROCÉDÉ ET INSTALLATION DE MONDAGE DE CÉRÉALES

(30) Priorität: 25.04.2006 DE 102006019609
(43) Veröffentlichungstag der Anmeldung: 07.01.2009
(73) Patentinhaber: Bühler AG, 9240 Uzwil (CH)
(72) Erfinder: GEHRIG, Klaus, 71711 Steinheim-Höpfigheim (DE); MENGER, Hans-Jörg, 68799 Reilingen (DE); KELLER, Urs, CH-8472 Seuzach (CH)
(74) Vertreter: Hepp Wenger Ryffel AG
(86) Internationale Anmeldenummer: PCT/CH2006/000553
(87) Internationale Veröffentlichungsnummer: WO 2007/121594

(56) Entgegenhaltungen:
- EP-A2- 0 849 356
- WO-A-01/21012
- DE-A1- 2 023 368
- DE-A1- 2 113 912
- DE-A1- 3 211 332
- DE-A1- 3 809 026
- DE-A1- 4 411 443
- DE-A1- 4 428 978
- DE-B1- 2 414 978
- GB-A- 805 718
- GB-A- 1 472 573
- JP-A- 56 068 384
- US-A- 3 647 473

## Beschreibung

Die Erfindung betrifft ein Verfahren und eine Anlage zur Entspelzung von Getreide, insbesondere zum Entfernen der Spelzen und/oder der Samenschale sowie des Keimlings von Getreide und/oder von gemälztem Getreide und dessen Verarbeitung in der Brauindustrie.

Nach dem Stand der Technik kann Getreide, vor der Vermälzung oder direkt vor Verarbeitung im Brauprozess nass und/oder trocken von der Spelze, und/oder der Samenschale sowie dem Keimling getrennt werden, und somit zusätzlich von nativen Verunreinigungen und/oder Schadstoffen von der Kornoberfläche gereinigt werden. In den vergangenen Jahrzehnten hat sich die weitgehend trockene Reinigung durchgesetzt. So beschreibt die CH-A-640750 ein Verfahren, bei dem Getreide einer trockenen Reinigung inklusive Scheuerung und Aspiration unterzogen wird. Anschliessend wird das Getreide genetzt und in Abstehzellen einige Stunden gelagert. Nach dem Abstehen erfolgt direkt vor der ersten Mahlpassage ein Schälen des Getreides. Der Schälung kann dabei noch eine Konditionierung vorangehen. Dies in Abhängigkeit vom Schälgrad und/oder der Mürbung der Körner nach dem Netzen und Abstehen.

Bekannt ist es auch, Getreidekörner soweit zu polieren, dass sie von der Fruchtwand gelöst sind und der Mehlkörper frei liegt (EP-B-218012). Hierbei werden die Fruchtwände in mehreren Polierschritten schrittweise entfernt, wobei den Körnern in mindestens einem schritt Feuchtigkeit zugeführt wird. Die befeuchteten Körner können zudem erwärmt werden. Nach der Erwärmung, die auch gleichzeitig mit der Befeuchtung erfolgen kann werden die Körner getrocknet und gekühlt. Gemäss der EP-B-529843 wird genetzter und polierter Weizen erneut gereinigt. Diese Reinigung ist eine Nassreinigung, um noch anhaftende Kleieteilchen vor allem auch aus der Furche zu entfernen. Auch das Schleifen von Malz auf Reisschleifmaschinen ist bekannt.

Aus der DE 4411443 ist ein Verfahren zur Verkürzung der Würzeherstellung bekannt. Braumalz wird in Spelzen und Mehle getrennt und die Spelzen in einem Läuterprozess als Filterschicht verwendet.

In der GB 805718 ist eine Maschine zum Scheuern, Schlagen, Bürsten und Polieren von körnigem Material offenbart. Ein Stator umgibt einen Rotor, wobei zwischen diesen ein Bearbeitungsraum entsteht.

Bekannt ist ebenfalls ein Scheuern von Getreide zur Reduzierung der Mikroflora der Spelzen/Samenschale sowie auch ein Schleifen von Getreide.

Ebenso bekannt sind Getreideschleifmaschinen mit vertikal angeordnetem Rotor, z.B. gemäss EP-B-742048, bei denen das zu schleifende Korngut zudem mit Luft durchströmt und mit Wasser genetzt werden kann.

Beim sogenannten PeriTec-Verfahren sollen ebenfalls die äusseren Zellschichten, eingeschlossen die Aleuronschicht, abgeschliffen werden. Weizen wird analog zu konventionellen Verfahren gereinigt und genetzt, auf Scheuermaschinen kann jedoch verzichtet werden. Vor dem Schleifen wird nochmals kontrolliert genetzt. Dadurch sollen die äusseren von den inneren Schichten gelöst werden, die dann bis unter die Testa abgerieben werden. In einer ersten Stufe wird die Kleie abrasiv in einer vertikalen Schleifmaschine entfernt und in einer zweiten Stufe durch Reibpolieren. Dadurch sollen die Abstehzeiten nach einem Aufnetzen vor der Vermahlung drastisch reduziert werden können. Die Eindringzeit des Wassers zur Mürbung soll nur ca. 30 Minuten betragen. Gleichzeitig werden auch Schadstoffbelastungen reduziert. Das Schleifen ermöglicht keine Entfernung des Keimlings.

Der Erfindung liegt die Aufgabe zugrunde, ein Verfahren zur Anlage zur Entspelzung von Getreide, insbesondere zum Entfernen der Spelzen und/oder der Samenschale sowie des Keimlings von Getreide und/oder von vermälztem Getreide und dessen Verarbeitung in der Brauindustrie zu schaffen. Dabei soll die Entfernung der beschriebenen Getreidebestandteile auch zu einer geschmacklichen Verbesserung des Brauproduktes führen.

Die Lösung der Aufgabe erfolgt mit den Merkmalen des Anspruchs 1. Beispielsweise erfolgt dies dadurch, dass gereinigtes, genetztes und gemälztes Braugetreide nachfolgend direkt geschält wird.

Die Spelzen können vollständig entfernt werden.

Nach dem Schälen wird das Braugetreide im weiteren Verfahrensablauf geschrotet.

Vorteilhafte Ausgestaltungen sind in den Unteransprüchen offenbart. Bei Bedarf kann auf das Schälen noch ein Schleifen und ggf. ein Polieren der Kornoberflächen folgen.

Grundsätzlich ist ein solches Schälverfahren für Brotgetreide (siehe Suntory) schon bekannt, wobei das Getreide jedoch vor dem Schälen nochmals genetzt wird um eine fehlerhafte Verarbeitung zu vermeiden. Es ist nicht naheliegend, dieses Verfahren erfindungsgemäss für Braugetreide abzuwandeln.

Gemälzte Gerste und oder andere Braurohstoffe müssen vor der weiteren Verarbeitung vollständig entspelzt werden und der darunter liegende Blattkeim muss entfernt werden.

Die bei dem erfindungsgemässen Prozess entfernten Spelzen und/oder Samenschalen, sowie die Keimlinge enthalten neben der wasserunlöslichen Cellulose auch wasserlösliche Substanzen wie Spelzenpolyphenole, Bitterstoffe, Lipide, Silikate und Eiweissbestandteile, deren zu starker Übergang in die Maische nachteilig für Farbe, Geschmack und die physikalisch/chemische Haltbarkeit des Bieres ist.

Bedingt durch die Eigenschaft einer gewissen Elastizität der Spelzen erhöht sich auch der energetische Aufwand der für die mechanische Zerkleinerung während des Schrotens aufzuwenden ist.

Werden die Spelzen bei einer nach dem Stand der Technik ausgelegten Schrotung während des Vermahlens zu stark mechanisch beansprucht brechen diese und der nachfolgende Läuterprozess, speziell sofern ein Läuterbottich zur Fest/Flüssigtrennung eingesetzt wind, wird negativ beeinflusst und zusätzlich wird durch die vergrösserte reaktive Fläche auch der Stoffübergang in die Maische erhöht.

Ein Verfahrensvorteil einer Spelzentrennung könnte aus qualitativen Gesichtspunkten eine Zugabe qualitativ hochwertiger (ganz erhaltenen) Spelzen zu einem späteren Zeitpunkt in den Prozess zurück sein, was Lautervorteile und Qualitätsvorteile ergeben kann.

Eine weitere Variante nach dem erfindungsgemässen Verfahren ist es, den gepeelten Rohstoff über eine Dispax/Hammermühle für den Läuterprozess mit Maischefiiter fein zu vermahlen.

Vorteile bestehen hinsichtlich Kinetik, Ausbeute, Qualität, geringerer Energieaufwand beim Mahlen.

Ein weiterer Vorteil der erfindungsgemässen Entfernung von Spelzen und oder Samenschalen sowie des Keimlings ist in der Schadstoffreduzierung in den oberflächennahen Schichten von nativem Getreide- und/oder vermälztem Getreide zu sehen.

Neben den qualitativen Gesichtspunkten, die durch die Entfernung der Spelzen und oder Samenschale und des Keimlings entstehen, kann ein geringerer Schadstoffgehalt der zu schrotenden Körner erreicht werden. Die entfernte Spelzenfraktion kann einer gezielten Verarbeitung und Verwertung zugeführt werden und/oder teilweise zu einem späteren Zeitpunkt dem Maischprozess wieder zugegeben werden. Durch diese Vorgehensweise wird die Getreide- und oder Malzqualität sowie der der Maischprozess beeinflusst.

Eine weitere Aufgabe besteht darin, eine Anlage zur Entspelzung von Getreide, insbesondere zum Entfernen der Spelzen und/oder der Samenschale sowie des Keimlings von Getreide und/oder von vermälztem Getreide zu schaffen. Diese Aufgabe ist mit den Merkmalen des Anspruchs 8 gelöst.

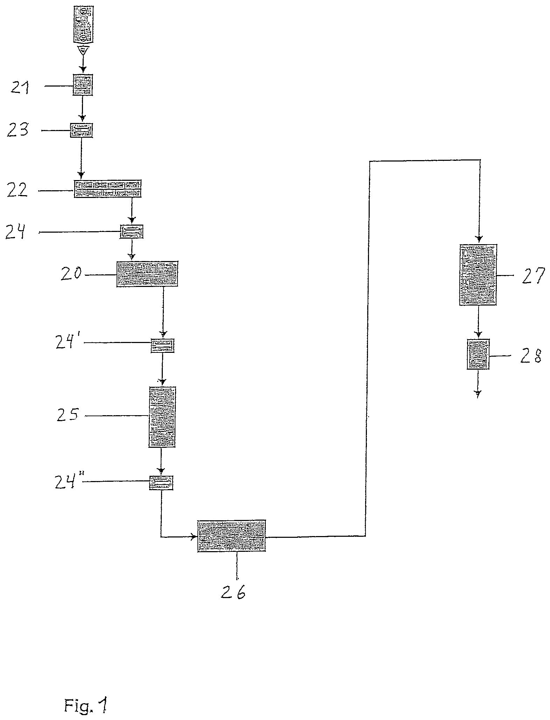

Die Erfindung wird nachfolgend in einem Ausführungsbeispiel an Hand einer Zeichnung näher beschrieben. In der Zeichnung zeigen die
- Fig. 1:: ein Verfahrensdiagramm

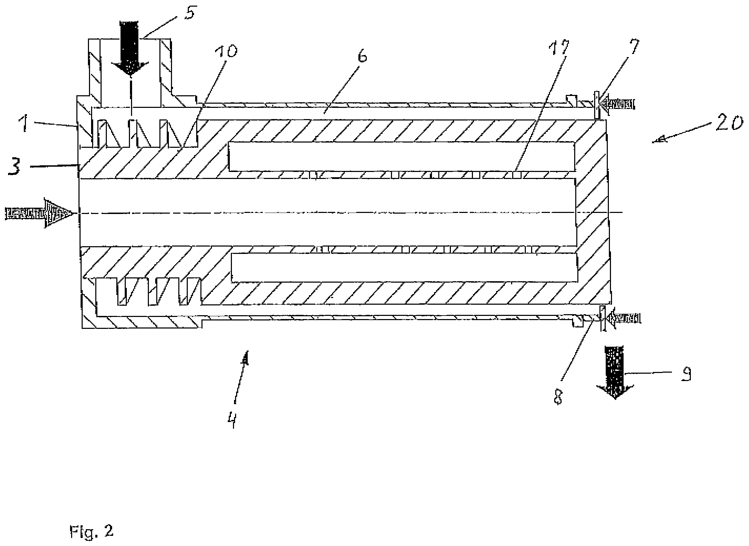

- Fig. 2:: eine Schälmaschine.

Der im Brauprozess zu verarbeitende Rohstoff gelangt aus nicht dargestellten Zellen in einen Dosierer 21, von da auf einen Magneten 23 und anschliessend in eine Schälmaschine 20, wo die Gerste mit einem Schälgrad von ca. 4% geschält wird. Während des Schälens wird die Gerste von einem Luftstrom durchströmt.

Die geschälte Gerste wird über einen Tarar 22 geführt.

Die so gereinigte und vorbereitete Gerste wird in einem Depot 27 zwischengelagert und über einen Dosierer 28 der Schrotung, beginnend mit dem ersten Schrot zugeführt. Die zweite Schrotstufe folgt direkt, ohne Zwischensichtung.

Der Stator 1 der Schälmaschine 20 weist ein Gehäuse 2 auf, das einen darin gelagerten Rotor 3 umgibt und auf einem Rahmengestell montiert und nach unten durch eine anschliessende Auslauftrimelle 4 offen ist. Durch diese Auslauftrimellen wird der Durchfall aus Schälmehl und Schalenteilen abgeführt.

Von einem Produkteinlauf 5 gelangen die Gerstenkörner über eine Speiseschnecke 10 in die Bearbeitungszone 6. Während des Schälens werden die Gerstenkörner gegen eine einstellbare Staueinrichtung 7 geführt, um einen spezifischen Bearbeitungsdruck in der Bearbeitungszone 6 zu bilden. Die geschälten Gerstenkörner verlassen die Bearbeitungszone 6 durch eine einstellbare Auslauföffnung 8 und über einen Auslauf 9 die Schälmaschine 20.

Die Bearbeitungszone 6 wird statorseitig von zwei Siebkörben gebildet, so dass sie den Rotor 3 in axialer Richtung vollständig umhüllen. Der Rotor 3 ist aus einer Hartgusswalze mit einer Hohlwelle gebildet. Die Walze beinhaltet Schlitze, die auf dem Umfang der Walze gleichmässig voneinander beabstandet angeordnet sind und die sich über die ganze Länge der Bearbeitungszone 6 erstrecken.

Die Siebkörbe bestehen aus einzelnen Siebblechen.

Die Hohlwelle weist eine Vielzahl von Öffnungen für den Austritt von Luft auf. Die Luft gelangt weiter durch die Schlitze in der Walze in die Bearbeitungszone 6 und hilft, Schalenteile etc. von den Gerstenkörnern zu separieren. Die Luft wird mittels eines Ventilators in die Hohlwelle gepresst.

### Bezugszeichen

- 1: Stator
- 2: Gehäuse
- 3: Rotor
- 4: Auslauftrimelle
- 5: Produkteinlauf
- 6: Bearbeitungszone
- 7: Staueinrichtung
- 8: Auslauföffnung
- 9: Auslauf
- 10: Speiseschnecke
- 20: Schälmaschine
- 21: Dosierer
- 22: Tarar
- 23: Magnet
- 27: Depot
- 28: Dosierer

## Patentansprüche

1. Verfahren zur Entspelzung von Getreide, insbesondere zum Entfernen der Spelzen und/oder der Samenschale sowie des Keimlings von Getreide, insbesondere von Braugetreide, welches zunächst gereinigt und dem Mälzprozess zugeführt wird und nachfolgend oberflächlich bearbeitet wird, wobei die Oberflächenbearbeitung ein Schälen ist, wobei eine Anlage nach Anspruch 8 verwendet wird.

2. Verfahren nach Anspruch 1, **dadurch gekennzeichnet, dass** die Oberfläche der Getreidekörner nach dem Schälen geschliffen und ggf. anschliessend poliert wird.

3. Verfahren nach Anspruch 1 oder 2, **dadurch gekennzeichnet, dass** mit dem Schälen auch der Blattkeim entfernt wird.

4. Verfahren nach einem der Ansprüche 1 bis 3, **dadurch gekennzeichnet, dass** die beim Schälen anfallende Spelzenfraktion separiert wird und zumindest teilweise in den Läuterprozess zurückgeführt wird.

5. Verfahren nach mindestens einem der Ansprüche 1 bis 3, **dadurch gekennzeichnet, dass** die geschälten Getreidekörner anschliessend geschrotet werden, bevorzugt in einer Doppelschrotstufe.

6. Verfahren nach mindestens einem der Ansprüche 1 bis 5, **dadurch gekennzeichnet, dass** die Vermahlung ein Nass- oder Trockenschroten sein kann.

7. Verfahren nach mindestens einem der Ansprüche 1 bis 6, **dadurch gekennzeichnet, dass** separat der Restextrakt von den Spelzen entfernt wird.

8. Anlage zur Entspelzung von Getreide, insbesondere zum Entfernen der Spelzen und/oder der Samenschale sowie des Keimlings von Getreide und/oder von vermälztem Getreide, enthaltend Mälzerei- und Dosierelemente, **dadurch gekennzeichnet, dass** dem Dosierelement in Produktflussrichtung eine Schälmaschine (20) nachgeordnet ist, wobei die Schälmaschine (20) einen drehbar gelagerten Rotor (3), der mit Bearbeitungswerkzeugen versehen ist und einen Stator (1), der Bearbeitungswerkzeuge und Siebkörbe beinhaltet, enthält, die den Rotor (3) unter Bildung einer Bearbeitungszone (6) umgeben, wobei der Rotor (3) aus einer Hohlwelle besteht, die im Bereich der Bearbeitungszone (6) von einer äusseren Walze umgeben ist, wobei die Hohlwelle eine Vielzahl von Öffnungen für den Austritt von Luft aufweist und die Luft weiter durch Schlitze in der Walze in die Bearbeitungszone (6) gelangt.

## Claims

1. A method for dehusking cereal grain, in particular for removing the husks and/or the seed coats as well as the germ from cereal grain, in particular brewer's grain, which is firstly cleaned and fed to the malting process and is then processed on its surface, wherein the surface processing consists of shelling, wherein a plant according to claim 8 is used.

2. The method according to claim 1, **characterised in that** the surface of the cereal grains is abraded and optionally then polished, after the shelling.

3. The method according to claim 1 or 2, **characterised in that** the plumule is also removed with the shelling.

4. The method according to any one of claims 1 to 3, **characterised in that** the husk fraction which is produced during the shelling is separated out and fed back, at least in part, into the lautering process.

5. The method according to at least one of claims 1 to 3, **characterised in that** the shelled cereal grains are then crushed, preferably in a two-stage crushing process.

6. The method according to at least one of claims 1 to 5, **characterised in that** the grinding can be either a wet or dry crushing.

7. The method according to at least one of claims 1 to 6, **characterised in that** the residual extract is removed separately from the husks.

8. A plant for dehusking cereal grain, in particular for removing the husks and/or the seed coats as well as the germ from cereal grain and/or from malted cereal grain, which plant contains malting and metering elements, **characterised in that** a shelling machine (20) is arranged downstream of the metering element in the direction of the product flow, wherein the shelling machine (20) has a rotatably mounted rotor (3), which is provided with processing tools, and a stator (1), which includes processing tools and sifting baskets which surround the rotor (3), thus forming a processing zone (6), wherein the rotor (3) consists of a hollow shaft, which is surrounded by an outer roller in the region of the processing zone (6), wherein the hollow shaft has multiple openings for the discharge of air and the air passes on further through slits in the roller into the processing zone (6).

## Revendications

1. Procédé de mondage de céréales, notamment pour le retrait des téguments, et/ou de la coque de graine, ainsi que du germe des céréales, notamment des céréales de brasserie, lesquelles sont d'abord nettoyées et ajoutées au processus de maltage et sont ensuite traitées en surface, où le traitement de la surface est un pelage, où une installation selon la revendication 8 est employée.

2. Procédé selon la revendication 1, **caractérisé en ce que** la surface des grains de céréales est limée, éventuellement, polie ultérieurement, après le pelage.

3. Procédé selon la revendication 1 ou 2, **caractérisé en ce qu'**avec le pelage, la plumule est également enlevée.

4. Procédé selon l'une des revendications 1 à 3, **caractérisé en ce que** la fraction de mondage produite lors du pelage est séparée et est au moins partiellement recyclée dans le processus de purification.

5. Procédé selon au moins l'une des revendications 1 à 3, **caractérisé en ce que** les grains de céréales pelés sont ensuite moulus grossièrement, de préférence dans une étape de mouture double.

6. Procédé selon au moins l'une des revendications 1 à 5, **caractérisé en ce que** la mouture peut être une mouture humide ou à sec.

7. Procédé selon au moins l'une des revendications 1 à 6, **caractérisé en ce que** l'extrait restant est enlevé séparément des téguments.

8. Installation de mondage de céréales, notamment pour le retrait des téguments, et/ou de la coque de graine ainsi que de la plumule des céréales et/ou des céréales maltées, contenant des éléments de maltage et de dosage, **caractérisée en ce qu'**une machine de pelage (20) est disposée après l'élément de dosage dans le sens du flux du produit, où la machine de pelage (20) contient un rotor (3) logé en pouvant tourner, qui est muni d'outils de traitement, et un stator (1), qui contient des outils de traitement et des tamis, qui entoure le rotor (3) moyennant la formation d'une zone de traitement (6), où le rotor (3) est constitué d'un arbre creux qui est entouré dans la région de la zone de traitement (6) d'un rouleau extérieur, où l'arbre creux présente une multiplicité d'orifices pour la sortie d'air et l'air atteint ensuite la zone de traitement (6) par des fente dans le rouleau.
